# EUROPÄISCHE PATENTSCHRIFT

(11) **EP 3 452 946 B1**
(45) Veröffentlichungstag und Bekanntmachung des Hinweises auf die Patenterteilung: **10.11.2021**
(21) Anmeldenummer: 17721526.6
(22) Anmeldetag: 28.04.2017
(51) Int. Cl.: G06F 21/57, G06F 9/445, G06F 9/44, G06F 21/72, G06F 21/77, H04W 4/50, G06F 9/4401, G06F 8/61, H04L 29/06, H04W 4/60, H04W 12/30

(54) **VERFAHREN ZUR ERSTMALIGEN INBETRIEBNAHME EINES NICHT VOLLSTÄNDIG PERSONALISIERTEN SICHEREN ELEMENTS**
METHOD FOR A FIRST START-UP OPERATION OF A SECURE ELEMENT WHICH IS NOT FULLY CUSTOMIZED
PROCÉDÉ DE MISE EN SERVICE INITIALE D'UN ÉLÉMENT SÉCURISÉ PAS ENTIÈREMENT PERSONNALISÉ

(30) Priorität: 02.05.2016 DE 102016005419
(43) Veröffentlichungstag der Anmeldung: 13.03.2019
(73) Patentinhaber: Giesecke+Devrient Mobile Security GmbH, 81677 München (DE)
(72) Erfinder: GÖTZE, Frank, 81379 München (DE); DIETZE, Claus, 82395 Obersöchering (DE); EICHHOLZ, Jan, 80997 München (DE)
(74) Vertreter: Giesecke + Devrient IP
(86) Internationale Anmeldenummer: PCT/EP2017/000537
(87) Internationale Veröffentlichungsnummer: WO 2017/190830

(56) Entgegenhaltungen:
- US-A1- 2014 137 102
- US-A1- 2015 134 958
- US-A1- 2015 312 698
- US-A1- 2015 382 178
- RAPPORTEUR: "Draft TS 103 384 v0.22.0 Draft eUICC Technical Specification", ETSI DRAFT; SCPTEC(16)000071, EUROPEAN TELECOMMUNICATIONS STANDARDS INSTITUTE (ETSI), 650, ROUTE DES LUCIOLES ; F-06921 SOPHIA-ANTIPOLIS ; FRANCE , Bd. - SCP TEC - SCP-TEC 14. April 2016 (2016-04-14), Seiten 1-35, XP014270232, Gefunden im Internet: URL:docbox.etsi.org\SCP\SCP-WG-T\05-CONTRI BUTIONS\2016\SCPTEC(16)000071_Draft_TS_103 _384_v0_22_0_Draft_eUICC_Technical_Specifi cation.zip\SCPTEC(16)000071_Draft_TS_103_3 84_v0_22_0_rev-marks.doc [gefunden am 2016-04-14]
- SCP REQ: "Re-scoping of the draft eUICC requirements specification;SCPREQ(13)000022r1", ETSI DRAFT; SCPREQ(13)000022R1, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. SCP, 6. Februar 2013 (2013-02-06), Seiten 1-19, XP014099404, [gefunden am 2013-02-06]
- "Reprogrammable SIMs: Technology, Evolution and Implications Final Report", , 25. September 2012 (2012-09-25), Seiten 1-95, XP055126567, Gefunden im Internet: URL:http://stakeholders.ofcom.org.uk/binar ies/research/telecoms-research/reprogramma ble-sims.pdf [gefunden am 2014-07-02]

## Beschreibung

Die Erfindung betrifft universelle integrierte Schaltungskarten (Universal Integrated Circuit Card, UICC) im Allgemeinen und betrifft vor allem Verfahren zur erstmaligen Inbetriebnahme eines nicht vollständig personalisierten sicheren Elements, insbesondere in Form einer UICC oder einer integrierten UICC (iUICC).

Heutige mobile Endgeräte sind meist eingerichtet um entfernbare universelle integrierte Schaltungskarten (UICC) aufzunehmen und zu betreiben. Eine vollständig personalisierte UICC ermöglicht dem mobilen Endgerät auf Dienste zuzugreifen, die von Betreibern mobiler Netzwerke (Mobile Network Operator, MNO) bereitgestellt werden. Die UICCs sind dabei derzeit als Karte oder als eingebettetes Modul (embedded UICC, eUICC) in verschiedenen Formfaktoren ausgeprägt. Insbesondere für eingebettete UICCs ist es dabei erforderlich, Daten und Teile des Betriebssystems über entsprechende Subskriptionsmanagementdienste pflegen zu können, also Daten und Programmteile anlegen, aktivieren, aktualisieren und löschen zu können.

Bei neuen Konzepten für mobile Endgeräte ist angedacht, die UICC nicht mehr als separates Element auszubilden, sondern in ein Ein-Chip-System des Endgeräts so zu integrieren, dass sie als in eine Sicherheitsumgebung des Ein-Chip-Systems geladene integrierte UICC (iUICC) vorliegt. In einem solchen Fall ist es wünschenswert, das gesamte Betriebssystem, nachfolgend auch als Firmware-Image bezeichnet, über einen Subskriptionsmanagementdienst in die Sicherheitsumgebung des mobilen Endgerätes laden und personalisieren zu können.

Derzeit ist zu diesem Zweck in der UICC ein Bootloader vorgesehen, der in der Regel vom Chiphersteller selbst bereitgestellt wird. Der Bootloader dient dazu, das von der UICC angefertigte Image, nämlich das oben genannte Firmware-Image, auf die UICC zu laden und dort zu installieren. Die Bootloader sind dabei so beschaffen, dass bestimmte Kommandosequenzen streng eingehalten und bestimmte Sicherheitsbedingungen erfüllt werden müssen. Wird versucht, heutige UICCs oder eUICCs, die nur einen Bootloader enthalten, in einem mobilen Endgerät in Betrieb zu nehmen, so führt dies zu einer Ablehnung der UICC durch den Baseband-Prozessor und der Ausgabe eine entsprechenden Fehlermeldung an den Benutzer. Eine nur mit einem Bootloader versehene UICC liefert beim Startup nämlich einen anderen Anwer-To-Reset (ATR) als eine vollständig personalisierte UICC. Weitere reguläre UICC Kommandos werden dann vom Bootloader ignoriert. Der Baseband-Prozessor schaltet als Folge die UICC ab, so dass diese nicht mehr für Subskriptionsmanagementbefehle zugänglich ist und der Download eines Firmware-Images somit nicht mehr möglich ist.

Weiter werden mobile Endgeräte und insbesondere Smartphones häufig vom Betreiber eines mobilen Netzwerks subventioniert und beispielsweise über eine Vertragslaufzeit von ein bis zwei Jahren finanziert. Während dieser Vertragslaufzeit soll es für einen Kunden manchmal nur möglich sein, das Gerät mit einer bestimmten SIM-Karte, in einem bestimmten Mobilfunknetz oder mit anderen Einschränkungen zu nutzen. Die derzeit zu diesem Zweck eingesetzten Verfahren sind allerdings nicht für integrierte UICCs geeignet. Es ist dabei davon auszugehen, dass mobile Endgeräte in diesem Fall mit einem generischen Bootloader ausgeliefert werden, der das Laden von iUICCs verschiedener Netzwerkbetreiber ermöglicht.

XP014270232 beschreibt, dass eine eUICC unterstützte eUICC-Funktionen durch Nutzung des Global Interface Bytes des ATR während des Initialisierungsvorgangs anzeigen muss.

XP014099404 beschreibt Zustände einer eUICC, welche Vorinitialisiert, Initialisiert, Provisioniert und Terminiert sind.

XP055126567 beschreibt ein minimales Betriebssystem, welches zusätzliche Funktionen herunterlädt.

US 2014/137102 A1 offenbart ein Verfahren zum Laden eines endgerätespezifischen Betriebssystems auf ein mobiles Endgerät über ein Netzwerk.

US 2015/312698 A1 offenbart das Laden und Installieren eines Betriebssystem für eine SIM mittels eines Bootloaders.

US 2015/382178 A1 beschreibt ein Verfahren zum Laden eines Profils auf ein Terminal über ein Mobilfunknetzwerk.

US 2015/134598 A1 beschreibt ein Verfahren zur Verwaltung eines sicheren Elements in Gestalt einer UICC. Auf die UICC wird im Rahmen einer Vorpersonalisierung eine Bootstrap-Anwendung aufgebracht. Mittels dieser werden anschließend vollständige Subscriber-Profile auf die UICC geladen. Ausgehend davon liegt Erfindung die Aufgabe zugrunde, die Nachteile des Stands der Technik zu vermeiden. Insbesondere soll ein Verfahren angegeben werden, dass eine erfolgreiche erstmalige Inbetriebnahme eines nicht vollständig personalisierten sicheren Elements erlaubt.

Diese Aufgabe wird durch die Merkmale der unabhängigen Ansprüche gelöst. Weiterbildungen der Erfindung sind Gegenstand der abhängigen Ansprüche.

Die Erfindung stellt ein Verfahren zur erstmaligen Inbetriebnahme eines noch kein Firmware-Image enthaltenen sicheren Elements in einem mobilen Endgerät zur Verfügung, wobei das sichere Element der Nutzung von Diensten eines Mobilfunknetzwerks dient. Bei dem Verfahren
- wird das sichere Element gestartet und zu einer Übermittlung einer Statusnachricht und zur Abarbeitung von Befehlen aufgefordert,
- übermittelt das sichere Element auf die Aufforderung hin eine erwartete Statusnachricht und quittierte die Abarbeitung der Befehle positiv um sicherzustellen, dass das sichere Element bei der erstmaligen Inbetriebnahme akzeptiert wird, und
- wird für die erstmalige Inbetriebnahme ein Download für ein Firmware-Image des sicheren Elements initiiert.

Diese Vorgehensweise ist insbesondere dann gut geeignet, wenn das weiter oben beschriebene Verfahren zur erstmaligen Inbetriebnahme eines nicht vollständig personalisierten sicheren Elements nicht zum Erfolg führt, beispielsweise weil der Baseband-Prozessor des mobilen Endgeräts nicht zum Empfang der beschriebenen Statusnachrichten eingerichtet ist.

Es ist natürlich auch möglich und oft sogar besonders vorteilhaft, die beiden genannten Vorgehensweisen miteinander zu kombinieren. Dies gilt insbesondere dann, wenn vorab nicht bekannt ist, ob der Baseband-Prozessor des mobilen Endgeräts zum Empfang der beschriebenen Statusnachrichten eingerichtet ist oder nicht. Es kann dabei insbesondere zunächst eine Statusnachricht der genannten Art übermittelt werden und im Misserfolgsfall auf die zweitgenannte Vorgehensweise zurückzugreifen.

Bei der konkreten Umsetzung kommen verschiedene Kombinationsmöglichkeiten in Betracht, beispielsweise kann das sichere Element nach einer nicht akzeptierten Statusnachricht in kurzem zeitlichen Abstand erneut zur Übermittlung einer Statusnachricht aufgefordert werden und aus dem kurzen zeitlichen Abstand der beiden Aufforderungen darauf schließen, dass der Baseband-Prozessor des mobilen Endgeräts nicht zum Empfang solcher Statusnachrichten eingerichtet ist, und die erneute Aufforderung dann auf die alternativ genannte Art durch Simulation der Antwort eines bereits vollständig personalisierten sicheren Elements beantworten.

Bei einem kombinierten Verfahren zur erstmaligen Inbetriebnahme eines noch kein Firmware-Image enthaltenen sicheren Elements in einem mobilen Endgerät, wobei das sichere Element der Nutzung von Diensten eines Mobilfunknetzwerks dient, ist dann vorgesehen, dass
- das sichere Element gestartet und zu einer Übermittlung einer Statusnachricht aufgefordert wird,
- das sichere Element auf eine erste Aufforderung hin eine Statusnachricht übermittelt, in der angegeben ist, dass das sichere Element S1) nur einen Bootloader, aber noch kein Firmware-Image für das sichere Element enthält, und
- falls die Statusnachricht nicht akzeptiert wird, das sichere Element auf eine weitere Aufforderung hin eine erwartete Statusnachricht übermittelt und auf eine Aufforderung zur Abarbeitung von Befehlen die Abarbeitung der Befehle positiv quittiert um sicherzustellen, dass das sichere Element bei der erstmaligen Inbetriebnahme akzeptiert wird, und
- für die erstmalige Inbetriebnahme ein Download für ein Firmware-Image des sicheren Elements initiiert wird.

Das sichere Element ist vorteilhaft als universelle intergierte Schaltungskarte (UICC) ausgebildet, oder ist als integrierte UICC (iUICC) ausgebildet, die in eine Sicherheitsumgebung des mobilen Endgeräts geladen ist. Vorteilhaft enthält das mobile Endgerät hierzu ein Ein-Chip-System mit einer Sicherheitsumgebung, beispielsweise in Form eines sicheren Prozessors, in die die iUICC geladen ist.

Ein weiteres Ziel besteht vorliegend darin, auch bei einer in eine Sicherheitsumgebung eines mobile Endgeräts geladenen integrierte UICC (iUICC) eine Netzbindung des mobilen Endgeräts für einen bestimmten Zeitraum zu ermöglichen.

Um dieses weitere Ziel zu erreichen wird, um die Netzbindung einer in eine Sicherheitsumgebung eines mobilen Endgeräts geladenen iUICC sicherzustellen, eine Start-UICC in die Sicherheitsumgebung geladen, die keine Subskriptionsdaten enthält, die aber Regeln zur Auswahl von einspielbaren Subskriptionsdaten enthält, und die nicht unautorisiert aus der Sicherheitsumgebung entfernbar ist.

Die Start-UICC kann insbesondere über einen generischen Bootloader in die Sicherheitsumgebung geladen werden, mit dem das mobile Endgerät anfänglich, beispielsweise vom OEM des Smartphones ausgestattet ist.

Eine Autorisierung zur Entfernung der Start-UICC kann beispielsweise über die Eingabe eines Codes erfolgen. Auch die Regeln zur Auswahl der einspielbaren Subskriptionsdaten können mit Vorteil nur autorisiert geändert werden. Dies kann beispielsweise nach Ablauf der gewünschten Netzbindungsdauer durch einen Server erfolgen.

Weiter ist der generische Bootloader vorteilhaft derart gesperrt, dass die Start-UICC nicht entfernt und keine zusätzliche UICC in die Sicherheitsumgebung geladen werden kann. Auch der generische Bootloader kann mit Vorteil nur autorisiert entsperrt werden.

Bei einem späteren Aufbringen von Subskriptionsdaten in die Start -UICC prüft diese, ob die Subskriptionsdaten konform zu den genannten Auswahlregeln sind. Ist dies der Fall, wird die Subskription durchgeführt, anderenfalls von der Start-UICC abgelehnt.

Alternativ kann die Start-UICC auch so ausgebildet sein, dass sie ein vollständiges Profil einschließlich Subskriptionsdaten enthält. Der generische Bootloader ist in diesem Fall so ausgebildet, dass er nur autorisierte iUICCs lädt, dass nur genau eine iUICC geladen sein kann, und dass eine Entfernung einer geladenen iUICC nur durch eine autorisierte Aktion erfolgen kann. In der Sicherheitsumgebung sind darüber hinaus mit Vorteil Routinen zur Verifikation einer geladenen iUICCs inklusive der Subskriptionsdaten hinterlegt, die bei jedem Laden einer iUICC in den Speicher der Sicherheitsumgebung abgearbeitet werden.

Weitere Ausführungsbeispiele sowie Vorteile der Erfindung werden nachfolgend anhand der Figur erläutert, bei deren Darstellung auf eine maßstabs- und proportionsgetreue Wiedergabe verzichtet wurde, um die Anschaulichkeit zu erhöhen.

Es zeigt:

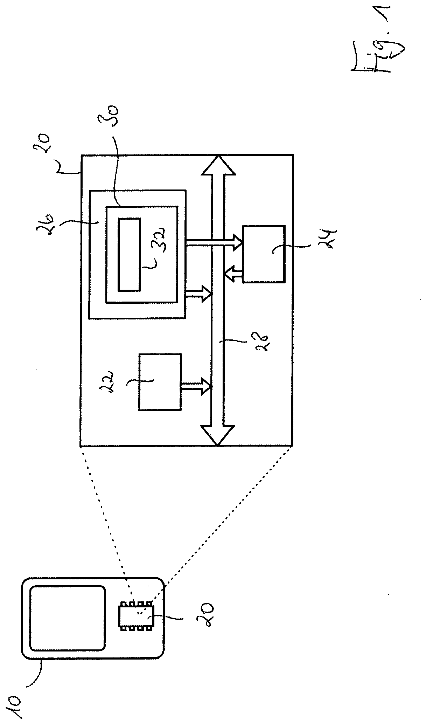

- Fig. 1: schematisch ein mobiles Endgerät mit einem Ein-Chip-System zur Erläuterung der Vorgehensweise bei einem erfindungsgemäßen Verfahren.

Die Erfindung wird nun am Beispiel der erstmaligen Inbetriebnahme einer iUICC (integrated UICC) in einem mobilen Endgerät erläutert. Figur 1 zeigt dazu schematisch ein mobiles Endgerät 10 mit einem Ein-Chip-System 20, das einen Applikationsprozessor 22, einen Baseband-Prozessor 24 und eine Sicherheitsumgebung 26 aufweist. Die verschiedenen Komponenten des Ein-Chip-Systems 20 kommunizieren miteinander über einen Systembus 28.

Im Speicher der Sicherheitsumgebung 26 ist eine iUICC 30 abgelegt, die nur einen Bootloader 32, aber noch kein Firmware-Image für die iUICC 30 enthält. Bei der erstmaligen Inbetriebnahme der iUICC bootet beim Starten des Ein-Chip-Systems 20 zunächst der Applikationsprozessor 22 und startet den Baseband-Prozessor 24. Dann wird, initiiert entweder durch den Baseband-Prozessor 24 oder den Applikationsprozessor 22, die IUICC 30 in der Sicherheitsumgebung 26 gestartet und zur Übermittlung einer Statusnachricht aufgefordert.

Als Antwort übermittelt der Bootloader 32 der iUICC 30 eine Statusnachricht an den Baseband-Prozessor 24, in der angegeben ist, ob die iUICC 30 nur einen Bootloader 32, aber noch kein Firmware-Image für die iUICC 30 enthält (Fall S1), ob die iUICC 30 bereits ein Firmware-Image enthält aber noch nicht vollständig personalisiert ist (Fall S2), oder ob die iUICC 30 bereits vollständig personalisiert ist (Fall S3).

Der Baseband-Prozessor 24 ist dabei so eingerichtet, dass er die iUICC 30 in der der Sicherheitsumgebung 26 in den Fällen S1), S2), und S3) akzeptiert, in anderen Fällen ablehnt. Je nach dem empfangenen Status kann der Baseband-Prozessor 24 weitere Aktionen initiieren. Beispielsweise wird im Fall S1) für die erstmalige Inbetriebnahme ein Download des Firmware-Image der iUICC 30 durchgeführt. Im Fall S2), in dem das Firmware-Image bereits vorliegt, kann mit Hilfe des Applikationsprozessors 22 eine Subskription durchgeführt werden, und im Fall S3) kann eine SIM-Initialisierung erfolgen.

Selbst wenn der Baseband-Prozessor 24 nicht wie oben beschrieben eingerichtet ist, kann der Bootloader 32 dennoch erreichen, dass die iUICC 30 vom Baseband-Prozessor 24 bei der erstmaligen Inbetriebnahme nicht abgelehnt wird. Dazu ist der Bootloader 32 der iUICC 30 so konfiguriert, dass er die vom Baseband-Prozessor 24 empfangenen Kommandos abarbeitet, ohne jedoch die jeweils dahinterstehende Funktionalität vollständig zur Verfügung zu stellen. Beispielsweise werden in der Startup-Sequenz vom Baseband-Prozessor 24 verschiedene Dateien selektiert und ausgelesen. Anstatt nun das Dateisystem selbst zu Verfügung zu stellen, ist der Bootloader 32 so eingerichtet, dass er die Existenz dieser Dateien lediglich simuliert, indem entsprechende Anfragen positiv quittiert werden.

Beispielsweise liefert der Bootloader 32 beim Auslesen einer Datei den minimalen leeren Defaultwert zurück, der pro Datei erwartet wird. Dies kann für eine Datei NULL sein, oder eine minimale Anzahl an Bytes mit leerem Eintrag, je nach Kontext etwa FF oder 00, oder ein Defaultwert nach Annex E der Spezifikation TS 31.102. Eine Authentisierungsanfrage wird mit einer entsprechenden Fehlermeldung quittiert. Befehle zum Beschreiben der Dateien werden gegenüber dem Baseband-Prozessor 24 zwar positiv quittiert, allerdings wird beim erneuten Lesen wieder der oben beschriebene Defaultwert geliefert. Insgesamt antwortet der Bootloader 32 auf die Anfragen des Baseband-Prozessors 24 wie von diesem erwartet und wird daher nicht als ungültige SIM abgelehnt, so dass nach der Starten der iUICC 30 der gewünschte Download des Firmware-Images durchgeführt werden kann.

Die zuletzt beschriebene Vorgehensweise kann auch erst dann durchgeführt werden, wenn die Übermittlung der zuerst beschriebenen Statusnachricht an den Baseband-Prozessor 24 gescheitert ist. Dabei übermittelt der Bootloader 32 auf die Anfrage des Baseband-Prozessors 24 zunächst die oben genannte Statusnachricht S1) mit dem Inhalt, dass die iUICC 30 nur einen Bootloader 32, aber noch kein Firmware-Image für das sichere Element enthält. Ist der Baseband-Prozessors 24 für den Empfang solcher Statusnachrichten eingerichtet, wird die Statusnachricht und damit die iUICC 30 akzeptiert und anschließend ein Download für ein Firmware-Image durchgeführt, wie oben beschrieben.

Wird die Statusnachricht S1) nicht akzeptiert, so schließt der Bootloader 32 darauf, dass der Baseband-Prozessor 24 des mobilen Endgeräts 10 nicht für den Empfang solcher Statusnachrichten eingerichtet ist und wählt als alternative Vorgehensweise bei einer erneuten Anfrage des Baseband-Prozessors 24 die oben beschriebene Simulation des ATR einer bereits vollständig personalisierten UICC. Nach dem erfolgreichen Passieren der Startup-Sequenz kann auch in diesem Fall der gewünschte Download des Firmware-Images durchgeführt werden.

In beiden beschriebenen Fällen bleibt die nur mit einem Bootloader 32 ausgestattete iUICC betriebsbereit und steht daher für Subskriptionsmanagementdienste zur Verfügung. Ein Abschalten des sicheren Elements durch den Baseband-Prozessor 24 wird verhindert. Im erstgenannten Fall kennt der Baseband-Prozessor 24 sogar den Status der iUICC 30 und kann daher statusabhängig entsprechende weitere Aktionen starten.

Die beschriebene Vorgehensweise kann auch bei klassischen UICCs im SIM-Karten-Formfaktor, sowie bei eingebetteten UICCs (eUICC) angewandt werden, sofern diese Plattformen einen Software-Image-Download unterstützen.

Falls die Hardware-Plattform zur Abbildung multipler SIM-Lösungen mehrere UICC-Plattformen parallel unterstützt, so werden alle Anfragen gemäß der oben beschriebenen Vorgehensweise beantwortet.

In einer Weiterbildung ist auch möglich, dass der oben beschriebene Bootloader 32 eine initiale minimale Subskription enthält, die zu einem Einbuchen in eine Mobilfunknetzwerk genutzt werden kann, mit der aber nur eine Software-Image und die zugehörigen Personalisierungsdaten geladen werden können.

## Patentansprüche

1. Verfahren zur erstmaligen Inbetriebnahme eines noch kein Firmware-Image enthaltenen sicheren Elements (30), das der Nutzung von Diensten eines Mobilfunknetzwerks dient, in einem mobilen Endgerät (10), wobei bei dem Verfahren
- das sichere Element (30) gestartet und zu einer Übermittlung einer Statusnachricht und zur Abarbeitung von Befehlen aufgefordert wird,
- das sichere Element (30) auf die Aufforderung hin eine erwartete Statusnachricht übermittelt und die Abarbeitung der Befehle positiv quittiert um sicherzustellen, dass das sichere Element (30) bei der erstmaligen Inbetriebnahme akzeptiert wird, und
- für die erstmalige Inbetriebnahme ein Download für ein Firmware-Image des sicheren Elements (30) initiiert wird.

2. Verfahren zur erstmaligen Inbetriebnahme eines noch kein Firmware-Image enthaltenen sicheren Elements (30), das der Nutzung von Diensten eines Mobilfunknetzwerks dient, in einem mobilen Endgerät (10), wobei bei dem Verfahren
- das sichere Element (30) gestartet und zu einer Übermittlung einer Statusnachricht aufgefordert wird,
- das sichere Element (30) auf eine erste Aufforderung hin eine Statusnachricht übermittelt, in der angegeben ist, dass das sichere Element (30) S1) nur einen Bootloader (32), aber noch kein Firmware-Image für das sichere Element (30) enthält, und
- falls die Statusnachricht nicht akzeptiert wird, das sichere Element (30) auf eine weitere Aufforderung hin eine erwartete Statusnachricht übermittelt und auf eine Aufforderung zur Abarbeitung von Befehlen die Abarbeitung der Befehle positiv quittiert um sicherzustellen, dass das sichere Element (30) bei der erstmaligen Inbetriebnahme akzeptiert wird, und
- für die erstmalige Inbetriebnahme ein Download für ein Firmware-Image des sicheren Elements (30) initiiert wird.

3. Verfahren nach Anspruch 1 oder 2, **dadurch gekennzeichnet, dass** das sichere Element (30) als universelle intergierte Schaltungskarte (Universal Integrated Circuit Card, UICC) ausgebildet ist.

4. Verfahren nach Anspruch 1 oder 2, **dadurch gekennzeichnet, dass** das sichere Element (30) als integrierte UICC (iUICC) ausgebildet ist, die in eine Sicherheitsumgebung (26) des mobilen Endgeräts (10) geladen ist.

## Claims

1. A method for the first-time startup of a secure element (30) not yet containing a firmware image, which serves for the use of services of a mobile communication network, in a mobile terminal (10), wherein in the method
- the secure element (30) is started and requested to transmit a status message and to execute commands,
- the secure element (30), in response to the request, transmits an expected status message and positively acknowledges the execution of the commands, in order to ensure that the secure element (30) is accepted upon the first-time startup, and
- a download for a firmware image of the secure element (30) is initiated for the first-time startup.

2. A method for the first-time startup of a secure element (30) not yet containing a firmware image, which serves for the use of services of a mobile communication network, in a mobile terminal (10), wherein in the method
- the secure element (30) is started and requested to transmit a status message,
- the secure element (30), in response to a first request, transmits a status message in which it is stated that the secure element (30) S1) contains only a boot loader (32), but as yet no firmware image for the secure element (30), and
- if the status message is not accepted, the secure element (30), in response to a further request, transmits an expected status message and, in response to a request to execute commands, positively acknowledges the execution of the commands, in order to ensure that the secure element (30) is accepted upon the first-time startup, and
- a download for a firmware image of the secure element (30) is initiated for the first-time startup.

3. The method according to claim 1 or 2, **characterized in that** the secure element (30) is configured as a universal integrated circuit card (UICC).

4. The method according to claim 1 or 2, **characterized in that** the secure element (30) is configured as an integrated UICC (iUICC) that is loaded into a security environment (26) of the mobile terminal (10).

## Revendications

1. Procédé de première mise en service d'un élément (30) sécurisé ne contenant pas encore d'image de firmware et servant à l'utilisation de services d'un réseau radio mobile, dans un terminal (10) mobile, cependant que, dans le procédé,
- l'élément (30) sécurisé est démarré et est incité à une transmission d'un message de statut et à l'accomplissement d'instructions,
- l'élément (30) sécurisé, à la suite de l'incitation, transmet un message attendu de statut et confirme positivement l'accomplissement des instructions afin de garantir que l'élément (30) sécurisé est accepté à la première mise en service, et
- pour la première mise en service, un téléchargement est lancé pour une image du firmware de l'élément (30) sécurisé.

2. Procédé de première mise en service d'un élément (30) sécurisé ne contenant pas encore d'image de firmware et servant à l'utilisation de services d'un réseau radio mobile, dans un terminal (10) mobile, cependant que, dans le procédé,
- l'élément (30) sécurisé est démarré et est incité à une transmission d'un message de statut,
- l'élément (30) sécurisé, à la suite d'une première incitation, transmet un message de statut dans lequel il est indiqué que l'élément (30) S1) sécurisé ne contient qu'un chargeur d'amorçage (32) mais pas encore d'image du firmware pour l'élément (30) sécurisé, et
- si le message de statut n'est pas accepté, l'élément (30) sécurisé, à la suite d'une autre incitation, transmet un message attendu, et, à la suite d'une incitation à l'accomplissement d'instructions, confirme positivement l'accomplissement des instructions afin de garantir que l'élément (30) sécurisé est accepté à la première mise en service, et
- pour la première mise en service, un téléchargement est lancé pour une image du firmware de l'élément (30) sécurisé.

3. Procédé selon la revendication 1 ou 2, **caractérisé en ce que** l'élément (30) sécurisé est réalisé en tant que carte universelle intégrée de circuit (Universal Integrated Circuit Card, UICC).

4. Procédé selon la revendications 1 ou 2, **caractérisé en ce que** l'élément (30) sécurisé est réalisé en tant que UICC (iUICC) intégrée qui est chargée dans un environnement de sécurité (26) du terminal (10) mobile.
